# EUROPEAN PATENT SPECIFICATION

(11) **EP 4 214 898 B1**
(45) Date of publication and mention of the grant of the patent: **24.04.2024**
(21) Application number: 21810186.3
(22) Date of filing: 20.10.2021
(51) Int. Cl.: H04L 9/40

(54) **ANOMALY DETECTION USING AN ENSEMBLE OF DETECTION MODELS**
ANOMALIEDETEKTION UNTER VERWENDUNG EINER ANORDNUNG VON DETEKTIONSMODELLEN
DÉTECTION D'ANOMALIES À L'AIDE D'UN ENSEMBLE DE MODÈLES DE DÉTECTION

(30) Priority: 20.10.2020 US 202017075024
(43) Date of publication of application: 26.07.2023
(73) Proprietor: Amazon Technologies, Inc., Seattle, WA 98108-1226 (US)
(72) Inventor: CHHABRA, Jasmeet, Seattle, Washington 98109-5210 (US); GASTHAUS, Jan, Seattle, Washington 98109-5210 (US); WALTER, Douglas Allen, Seattle, Washington 98109-5210 (US); JANUSCHOWSKI, Tim, Seattle, Washington 98109-5210 (US); KULKARNI, Harshad Vasant, Seattle, Washington 98109-5210 (US); DHARIA, Vikas, Seattle, Washington 98109-5210 (US); TONGIA, Rahul, Seattle, Washington 98109-5210 (US); FLUNKERT, Valentin, Seattle, Washington 98109-5210 (US)
(74) Representative: Haseltine Lake Kempner LLP
(86) International application number: PCT/US2021/055761
(87) International publication number: WO 2022/087075

(56) References cited:
- US-A1- 2019 081 876
- US-A1- 2020 267 057
- US-A1- 2020 296 124

## Description

### BACKGROUND

Anomaly detection is one of the cornerstone problems in data mining. Some systems in the market generate anomalies on time series based on forecast models such as Holt-Winters. The output of these models is probability distribution of future values of time series. Anomalies in these models are generated when the time series input is low probability as compared to predictions. Reference may be made to US 2020/296124 A1 which relates to identifying threat indicators by processing multiple anomalies, US 2020/267057 A1 which relates to systems and methods for automatically detecting, summarizing, and responding to anomalies, and US 2019/081876 A1 which relates to real time anomaly detection for data streams.

### SUMMARY

The invention is defined in the independent claims, to which reference should now be made. Advantageous optional features are included in the dependent claims.

### BRIEF DESCRIPTION OF DRAWINGS

Various embodiments in accordance with the present disclosure will be described with reference to the drawings, in which:
FIG. 1 illustrates embodiments of a provider network that includes an anomaly detection service.
FIG. 2 illustrates an example of an anomaly that the anomaly detection service can detect according to some embodiments.
FIG. 3 illustrates an example of an anomaly that the anomaly detection service can detect according to some embodiments.
FIG. 4 illustrates embodiments of an anomaly detection service such as the anomaly detection service.
FIG. 5 is a flow diagram illustrating operations of a method for anomaly detection according to some embodiments.
FIG. 6 illustrates an example provider network environment according to some embodiments.
FIG. 7 is a block diagram of an example provider network that provides a storage service and a hardware virtualization service to customers according to some embodiments.
FIG. 8 is a block diagram illustrating an example computer system that may be used in some embodiments.

### DETAILED DESCRIPTION

The present disclosure relates to methods, apparatus, systems, and non-transitory computer-readable storage media for an anomaly detection service. According to some embodiments, the anomaly detection services uses an ensemble of models to observe potentially anomalous behavior. In the aggregate, the potentially anomalous behavior may be explainable as an anomaly. Domain knowledge is utilized to select which model(s) is/are to be used to observe the potentially anomalous behavior of time series data for a particular problem (e.g., changepoint issues, threshold violation, missing value, etc.).

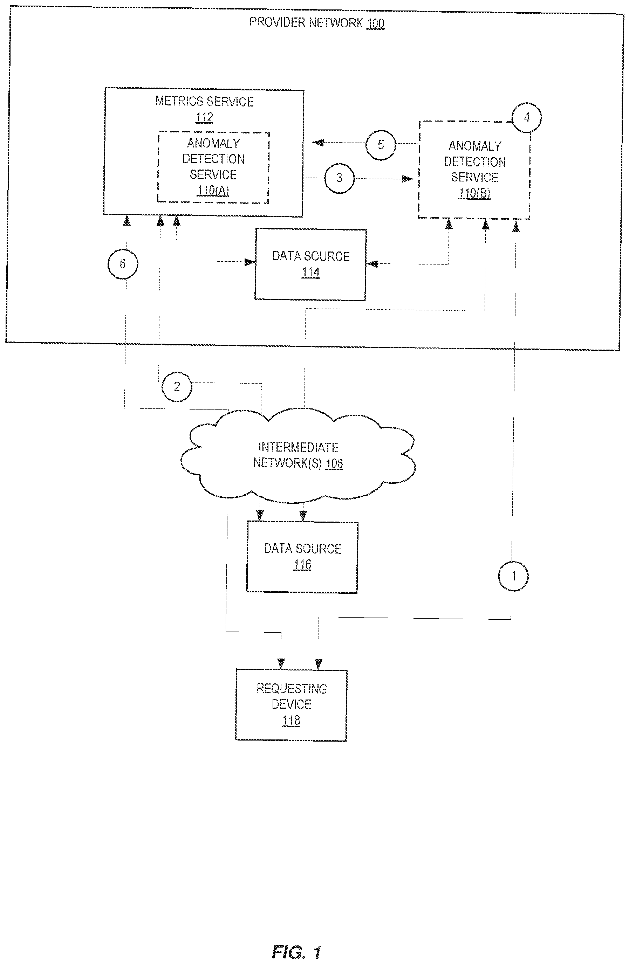

FIG. 1 illustrates embodiments of a provider network that includes an anomaly detection service. The anomaly detection service 110(A) or 110(B) incorporates operational domain knowledge of metrics into the selection of models and the training/using of the models. In some embodiments, the anomaly detection service 110(A) or 110(B) generates explainable anomalies from time series data provided by a data source (such as internal data source 114 and external data source 116). Note that in some embodiments, as shown, the anomaly detection service is a part of a metrics service 112 (anomaly detection service 110(A)) and in some embodiments, the anomaly detection service is external to the metrics service 112 (anomaly detection service 110(B)). The metrics service 112 may perform one or more of the following non-anomaly detection functions: collecting and storing logs, collecting metrics (including time series data) that may be default or custom, aggregating metrics, generating alarms, auto scale resources, etc.

The data sources 114 and 116 provide time series data to be evaluated by the anomaly detection service 110(A) or 110(B) for potential anomalies. Note that an anomaly does not necessarily mean an alarm, as not all requesters want alarms for each anomaly, but rather only for "important" issues. For example, an anomaly that is not indicative of an unhealthy system may be of interest, but not necessarily something that needs to be acted on. As such, in some embodiments, the anomalies captured are a superset of the ones that generate alarms.

The anomaly detection service 110(A) or 110(B) includes, or has access to, a plurality of different machine learning models (an ensemble) or other anomaly detection mechanisms (e.g., statistical). These models/algorithms analyze metrics of systems and applications, determine normal baselines, and surface anomalies with minimal user intervention. Enabling anomaly detection for a metric may cause an application machine learning algorithms or models to the metric's past data to create a model of the metric's expected values. The model assesses both trends and hourly, daily, and weekly patterns of the metric.

Based on the metrics (time series data) to evaluate, the anomaly detection service 110(A) or 110(B) is configured to use an optimal model, etc. Types of anomalies and alarms differ between types of metrics, types of applications, etc. Annotating anomalies with types allows for the flexibility to pick the right type of anomalies based on the metric and/or user feedback. User feedback and unique metric requirements are used to adjust what model is used (for example, based on an annotation of a data set, anomaly, etc.), retrain a model, set different thresholds for reporting, etc. For example, user feedback may be used to: adjust importance of an anomaly or insight of the anomaly, adjust what type of anomalies are used to create an insight for a metric, etc. For example, if a user gives feedback that seasonal anomalies are not useful for a certain metric, those anomalies are muted. To get better feedback, the type of anomaly is used to generate explanations which are shown the user. For example, if the anomaly is due to trend changes, the user may be shown the explanation of how the trend changed.

Domain knowledge is used to annotate metrics and select which models are used by the anomaly detection service 110(A) or 110(B) to create anomalies and rules used for threshold-based anomalies. Domain knowledge may also be used to determine when to alarm on an anomaly.

To handle unknown metrics, the anomaly detection service 110(A) or 110(B) may start in a conservative state such that only high threshold breaches generate alarms and other detectors are selected based on metadata annotator's analysis. For example, if a detector configuration generator classifies time series as continuous and stationary, change-point and missing-value detectors are typically selected. Alarms are adjusted based on user feedback. For example, for the custom metric, the user may provide feedback that threshold breaches at a lower end of the metric are not alarmable and thus new alarms for such an event are not generated.

A provider network 100 (or, "cloud" provider network) provides users with the ability to utilize one or more of a variety of types of computing-related resources such as compute resources (e.g., executing virtual machine (VM) instances and/or containers, executing batch jobs, executing code without provisioning servers), data/storage resources (e.g., object storage, block-level storage, data archival storage, databases and database tables, etc.), network-related resources (e.g., configuring virtual networks including groups of compute resources, content delivery networks (CDNs), Domain Name Service (DNS)), application resources (e.g., databases, application build/deployment services), access policies or roles, identity policies or roles, machine images, routers and other data processing resources, etc. These and other computing resources may be provided as services, such as a hardware virtualization service that can execute compute instances, a storage service that can store data objects, etc. The users (or "customers") of provider networks 100 may utilize one or more user accounts that are associated with a customer account, though these terms may be used somewhat interchangeably depending upon the context of use. Users may interact with a provider network 100 across one or more intermediate networks 106 (e.g., the internet) via one or more interface(s), such as through use of application programming interface (API) calls, via a console implemented as a website or application, etc. An API refers to an interface and/or communication protocol between a client and a server, such that if the client makes a request in a predefined format, the client should receive a response in a specific format or initiate a defined action. In the cloud provider network context, APIs provide a gateway for customers to access cloud infrastructure by allowing customers to obtain data from or cause actions within the cloud provider network, enabling the development of applications that interact with resources and services hosted in the cloud provider network. APIs can also enable different services of the cloud provider network to exchange data with one another. The interface(s) may be part of, or serve as a front-end to, a control plane of the provider network 100 that includes "backend" services supporting and enabling the services that may be more directly offered to customers.

For example, a cloud provider network (or just "cloud") typically refers to a large pool of accessible virtualized computing resources (such as compute, storage, and networking resources, applications, and services). A cloud can provide convenient, on-demand network access to a shared pool of configurable computing resources that can be programmatically provisioned and released in response to customer commands. These resources can be dynamically provisioned and reconfigured to adjust to variable load. Cloud computing can thus be considered as both the applications delivered as services over a publicly accessible network (e.g., the Internet, a cellular communication network) and the hardware and software in cloud provider data centers that provide those services.

A cloud provider network can be formed as a number of regions, where a region is a geographical area in which the cloud provider clusters data centers. Each region includes multiple (e.g., two or more) availability zones (AZs) connected to one another via a private high-speed network, for example a fiber communication connection. An AZ (also known as an availability domain, or simply a "zone") provides an isolated failure domain including one or more data center facilities with separate power, separate networking, and separate cooling from those in another AZ. A data center refers to a physical building or enclosure that houses and provides power and cooling to servers of the cloud provider network. Preferably, AZs within a region are positioned far enough away from one another so that a natural disaster (or other failure-inducing event) should not affect or take more than one AZ offline at the same time.

Customers can connect to an AZ of the cloud provider network via a publicly accessible network (e.g., the Internet, a cellular communication network), e.g., by way of a transit center (TC). TCs are the primary backbone locations linking customers to the cloud provider network and may be collocated at other network provider facilities (e.g., Internet service providers (ISPs), telecommunications providers) and securely connected (e.g., via a VPN or direct connection) to the AZs. Each region can operate two or more TCs for redundancy. Regions are connected to a global network which includes private networking infrastructure (e.g., fiber connections controlled by the cloud provider) connecting each region to at least one other region. The cloud provider network may deliver content from points of presence (or "POPs") outside of, but networked with, these regions by way of edge locations and regional edge cache servers. This compartmentalization and geographic distribution of computing hardware enables the cloud provider network to provide low-latency resource access to customers on a global scale with a high degree of fault tolerance and stability.

To provide these and other computing resource services, provider networks 100 often rely upon virtualization techniques. For example, virtualization technologies may be used to provide users the ability to control or utilize compute resources (e.g., a "compute instance" such as a VM using a guest operating system (O/S) that operates using a hypervisor that may or may not further operate on top of an underlying host O/S, a container that may or may not operate in a VM, a compute instance that can execute on "bare metal" hardware without an underlying hypervisor), where one or multiple compute resources can be implemented using a single electronic device. Thus, a user may directly utilize a compute resource (e.g., provided by a hardware virtualization service) hosted by the provider network to perform a variety of computing tasks. Additionally, or alternatively, a user may indirectly utilize a compute resource by submitting code to be executed by the provider network (e.g., via an on-demand code execution service), which in turn utilizes one or more compute resources to execute the code - typically without the user having any control of or knowledge of the underlying compute instance(s) involved.

For example, in various embodiments, a "serverless" function may include code provided by a user or other entity - such as the provider network itself - that can be executed on demand. Serverless functions may be maintained within provider network 100 by an on-demand code execution service and may be associated with a particular user or account or be generally accessible to multiple users/accounts. A serverless function may be associated with a Uniform Resource Locator (URL), Uniform Resource Identifier (URI), or other reference, which may be used to invoke the serverless function. A serverless function may be executed by a compute resource, such as a virtual machine, container, etc., when triggered or invoked. In some embodiments, a serverless function can be invoked through an application programming interface (API) call or a specially formatted HyperText Transport Protocol (HTTP) request message. Accordingly, users can define serverless functions that can be executed on demand, without requiring the user to maintain dedicated infrastructure to execute the serverless function. Instead, the serverless functions can be executed on demand using resources maintained by the provider network 100. In some embodiments, these resources may be maintained in a "ready" state (e.g., having a pre-initialized runtime environment configured to execute the serverless functions), allowing the serverless functions to be executed in near real-time.

Circles with numbers inside indicate an exemplary flow of activities. At circle 1, a requesting device 118 sends a request to the provider network 10 configure the anomaly detection service 110(B). Exemplary content of such a request is detailed later.

At circle 2, after the configuration of the anomaly detection service 110(B) (including the selection of one or more ML models to use to detect anomalies, etc.), the data source 116 provides time series data to be evaluated. In this illustration, that time series data is consumed by the metrics service 112 and then provided to the anomaly detection service 110(B) at circle 3. The anomaly detection service 110(B) evaluates the time series data at circle 4 and determines there is an anomaly. The anomaly detection service 110(B) sends an indication of the anomaly to the metrics service 112 which makes it available to a user (such as of the requesting device 118) at circle 6.

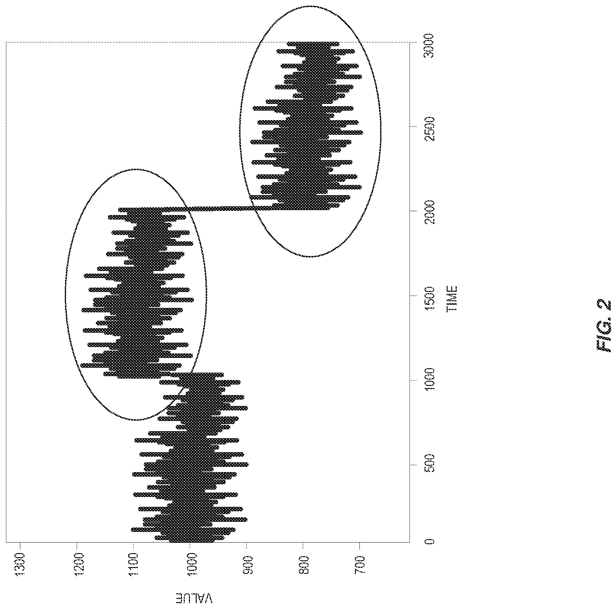

FIG. 2 illustrates an example of an anomaly that the anomaly detection service 110(A) or (B) can detect according to some embodiments. In particular, what is detected is a changepoint. In this example, two changepoints were detected. In this illustration, the anomaly detection model selected to determine when a changepoint has occurred learns new behavior in 500 data points. A first "event" started at t=1000 and was detected at t=1050. In particular, a changepoint mean increase was detected. The first event ended at t=1500. A second "event" started at t=1900 and was detected at t=2050. In particular, a changepoint mean decrease was detected. The second event ended at t=2500. The output of the anomaly detection service 110(A) or (B) includes the event duration (start/stop time) and a type. In some embodiments, a score is also output. An event is generically something of interest, a score is how different that event is from an expected value, and the type is the type of anomaly.

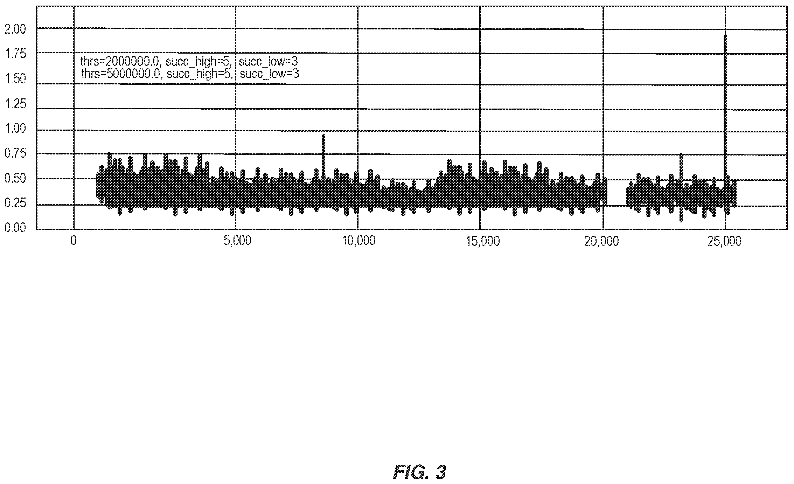

FIG. 3 illustrates an example of an anomaly that the anomaly detection service 110(A) or (B) can detect according to some embodiments. In particular, what is detected is a threshold-based anomaly. In this example, the "event' started at t=24000 and was detected at t=24003. The type of event was above a threshold.

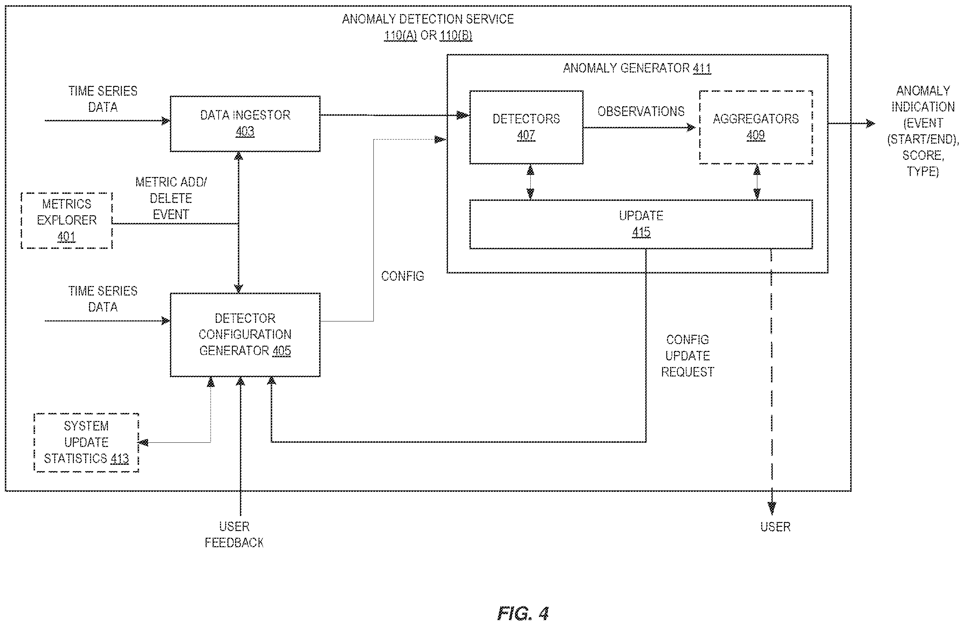

FIG. 4 illustrates embodiments of an anomaly detection service such as the anomaly detection service 110(A) or 110(B). This anomaly detection service 110(A) or 110(B) in generically composed of one or more of: a metrics explorer 401, a detector configuration generator 405, a data ingestor 403, and an anomaly generator 411.

In some embodiments, the metrics explorer 401 scans for metrics (e.g., from a metrics service 112) to determine which metrics to add or delete for anomaly detection. As such, the metrics explorer 401 determines which metrics to add/delete for data ingestion and to be used to determine how to configure the anomaly generator 411. Note that in some embodiments, metrics are added/deleted by specific user request. In some embodiments, the metrics explorer 401 generates metric metadata.

The data ingestor 403 takes in timeseries data from a data source to be evaluated by the anomaly generator 411. In some embodiments, the data ingestor 403 formats the time series data prior to presenting it to the anomaly generator 411. Data sources include databases, streams (e.g., video, audio, and data), etc.

The detector configuration generator 405 takes in metric metadata (domain knowledge such as known latency metrics, etc.), the time series data (metrics), system update statistics 413 (global usage knowledge such as an analysis of data usage in the provider network), and/or information from the metrics explorer 401 to determine which of the detectors 407 of the anomaly generator 411 are to be used to detect potential anomalies from the time series data. The detector configuration generator 405 analyzes metrics and determines attributes (annotations) to metric metadata for use by the anomaly generator 411. Examples of annotations include, but are not limited to: a metric resource type (stream, database, etc.); a metric type such as throttle, request rate, latency, error rate, custom, etc.; metric features such as seasonality period(s), stationary, etc.; metric limit thresholds (such as Disk={Medium=70%,High=80%}, ProvisionedLimit={Medium=150,High=175}); and metric domain knowledge (such as Alarm_Threshold-upper, Interest_Threshold_lower, Interest_Changepoint, Interest_missing_values, etc.). The detector configuration generator 405 uses this information (and information about available detectors) to generate a configuration for the anomaly detector 411. The configuration may include one or more of: the metric to evaluate, the detector(s) to use, how to configure the detectors, domain knowledge metadata that of interest (e.g., thresholds, aggregation information), a time series data source, and an indication of the aggregator of one or more aggregators 409 to use to determine when there is an anomaly. The detector configuration generator 405 may also receive user feedback to adjust model sensitivity, what items are not of interest (which can then be used to retrain a detector or inform an aggregator to ignore an observation), etc.

The anomaly generator 411 takes in time series data (and in some instances metric metadata) as input and generates, as configured, anomaly indications as events (event start/end) and type as output. In some embodiments, the anomaly indications include a score. Types of anomalies may include, but are not limited to: changepoint, threshold, and missing data. As shown, the anomaly generator 411 is decomposed into multiple subsystems. The detectors 407 are machine learning models, statistics-based, and/or rules-based detectors that evaluate time series data to generate observations of potential anomalies.

These observations are received by one or more aggregators 409 which determine when enough observations have occurred that there is an event that can be considered an anomaly. There is typically an aggregator per model and/or metric. The aggregators 409 generate anomaly indications which include one or more of event information (start, stop, detection), a score, and a type. In general, aggregators 409 are in a 1:N ratio with the detectors. In some embodiments, the detectors 407 and aggregators 409 are combined.

Additionally, the anomaly generator 411 includes an update mechanism 415 in some embodiments. For example, if the detectors 407 are observing an abnormal number of events (either too many or too few), then the configuration of the anomaly generator 411 may need to be changed. As such, an update request would be generated and sent to the detector configuration generator 405 including information such as the time of observations, the type of observation, etc. The update mechanism 415 may also alert a user of the need for a potential update.

To help understand how embodiments of the anomaly detection service 110(A) or 110(B) may work an exemplary latency use case is described. The detector configuration generator 405 uses metadata on the metric on what type of things are of interest for latency such as an upper threshold, a lower threshold, changepoint, missing value, etc. When the data ingestor 403 starts ingesting the metric, it is sent to the anomaly generator 411 to be processed by configured detector. Open the detector finding a potential anomaly, an observation is generated which consists of event type and start/end/detection times if appropriate. In some cases, a score is also generated. When the aggregator receives this observation, it decides if it has enough to generate an anomaly to present to a user, etc.

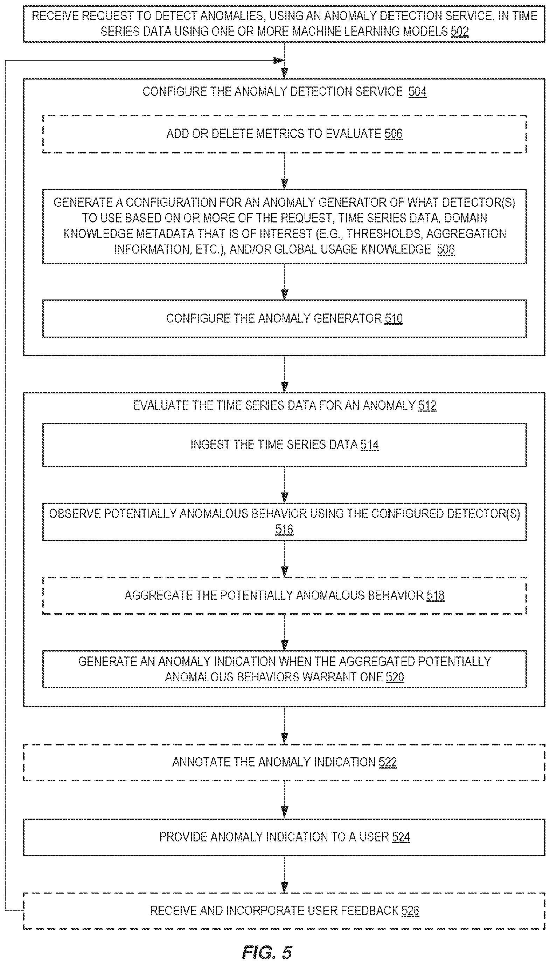

FIG. 5 is a flow diagram illustrating operations of a method for anomaly detection according to some embodiments. Some or all of the operations (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some embodiments, one or more (or all) of the operations are performed by the anomaly detection service 110(A) or 110(B) of the other figures.

At 502, a request to detect anomalies, using an anomaly detection service, in time series data using one or more machine learning models is received. The request may include one or more of: an indication of a source of time series data to evaluate, a location of where to put detected anomalies, an indication of what users are allowed to provide feedback, an initial configuration (such as sensitivity, indication of what is or is not of interest as anomalies, thresholds, etc.), what type of anomaly to detect, when to present an anomaly, an indication of who is to receive anomalies or indications of their existence, a namespace that includes the metric, a period for evaluation, a statistic or percentile to use, datapoints to alarm and/or provide an anomaly indication, an indication of treatment of missing data (treat as acceptable, ignore, treat as unacceptable, etc.), etc.

The anomaly detection service is configured at 504. This configuration may include several different acts. In some embodiments, a metrics explorer is engaged to determine which metrics to add or delete metrics for evaluation at 506. For example, if the request included an indication of what type of anomaly to detect, the metrics explorer could determine what time series data would be useful in make that detection. Similarly, for an existing configuration, the metrics explorer could be used to determine which data to evaluate based on feedback (from a user or the anomaly generator 411).

At 508, a configuration for an anomaly generator of what detector(s) to use based on one or more of the request, time series data, domain knowledge metadata that is of interest (e.g., thresholds, aggregation information, etc.), global usage knowledge, a time series data source, and/or an aggregator to use is generated. Note that in some embodiments, feedback is incorporated into this configuration generation. The anomaly generator is configured using the generated configuration at 510.

The time series data is evaluated for an anomaly at 512. At 514 the time series data is ingested. The ingestion may include formatting, decrypting, etc. A potentially anomalous behavior is observed using the configured detector(s) at 516. The potentially anomalous behavior is aggregated with other observed potential anomalous behavior at 518. An anomaly indication is generated when the aggregated potentially anomalous behavior warrants such an indication at 520. For example, when there are a certain number of changepoints within a set period of time (as configured), when a threshold has been exceeded a set number of times, etc. Note that in some embodiments, a severe enough anomaly (e.g., a threshold is considerably passed, etc.) is generated regardless of the number of anomalies.

In some embodiments, the anomaly indication is annotated at 522. This annotation provides insight as to what caused the anomaly.

An anomaly indication is provided to a user at 524. This may come in the form of being made available in a dashboard, messaged, etc. Note, the user does not need to be the requester. The anomaly indication includes one or more of: event information (start/stop/detection time), a score, and a type of anomaly.

At 526 user feedback is received and incorporated in some embodiments. For example, user feedback regarding an anomaly that was not actually an anomaly is received and used to reconfigure the anomaly generator 411.

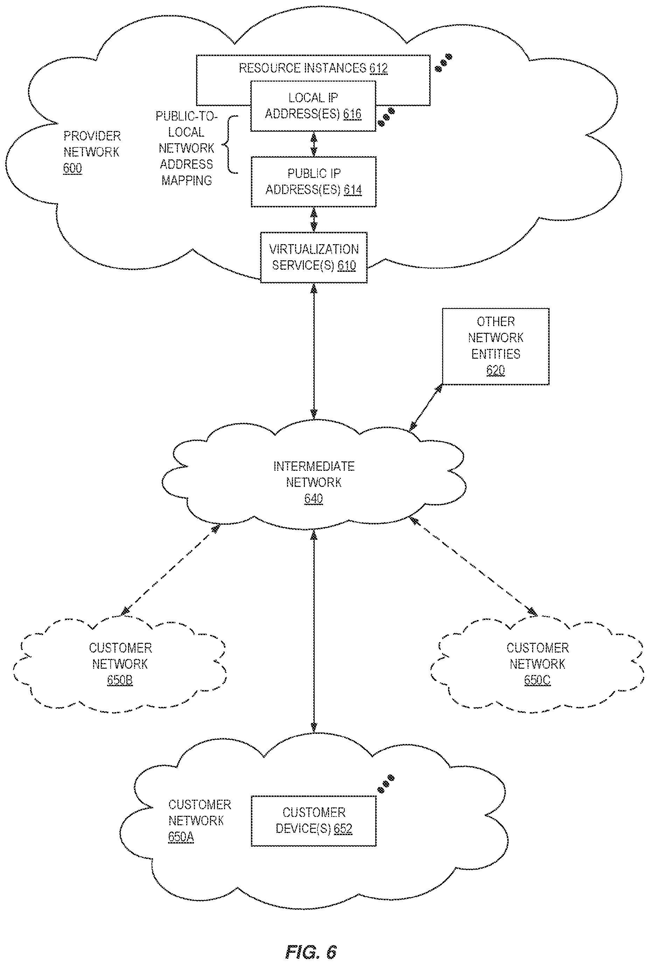

FIG. 6 illustrates an example provider network (or "service provider system") environment according to some embodiments. A provider network 600 may provide resource virtualization to customers via one or more virtualization services 610 that allow customers to purchase, rent, or otherwise obtain instances 612 of virtualized resources, including but not limited to computation and storage resources, implemented on devices within the provider network or networks in one or more data centers. Local Internet Protocol (IP) addresses 616 may be associated with the resource instances 612; the local IP addresses are the internal network addresses of the resource instances 612 on the provider network 600. In some embodiments, the provider network 600 may also provide public IP addresses 614 and/or public IP address ranges (e.g., Internet Protocol version 4 (IPv4) or Internet Protocol version 6 (IPv6) addresses) that customers may obtain from the provider 600.

Conventionally, the provider network 600, via the virtualization services 610, may allow a customer of the service provider (e.g., a customer that operates one or more client networks 650A-650C including one or more customer device(s) 652) to dynamically associate at least some public IP addresses 614 assigned or allocated to the customer with particular resource instances 612 assigned to the customer. The provider network 600 may also allow the customer to remap a public IP address 614, previously mapped to one virtualized computing resource instance 612 allocated to the customer, to another virtualized computing resource instance 612 that is also allocated to the customer. Using the virtualized computing resource instances 612 and public IP addresses 614 provided by the service provider, a customer of the service provider such as the operator of customer network(s) 650A-650C may, for example, implement customer-specific applications and present the customer's applications on an intermediate network 640, such as the Internet. Other network entities 620 on the intermediate network 640 may then generate traffic to a destination public IP address 614 published by the customer network(s) 650A-650C; the traffic is routed to the service provider data center, and at the data center is routed, via a network substrate, to the local IP address 616 of the virtualized computing resource instance 612 currently mapped to the destination public IP address 614. Similarly, response traffic from the virtualized computing resource instance 612 may be routed via the network substrate back onto the intermediate network 640 to the source entity 620.

Local IP addresses, as used herein, refer to the internal or "private" network addresses, for example, of resource instances in a provider network. Local IP addresses can be within address blocks reserved by Internet Engineering Task Force (IETF) Request for Comments (RFC) 1918 and/or of an address format specified by IETF RFC 4193 and may be mutable within the provider network. Network traffic originating outside the provider network is not directly routed to local IP addresses; instead, the traffic uses public IP addresses that are mapped to the local IP addresses of the resource instances. The provider network may include networking devices or appliances that provide network address translation (NAT) or similar functionality to perform the mapping from public IP addresses to local IP addresses and vice versa.

Public IP addresses are Internet mutable network addresses that are assigned to resource instances, either by the service provider or by the customer. Traffic routed to a public IP address is translated, for example via 1: 1 NAT, and forwarded to the respective local IP address of a resource instance.

Some public IP addresses may be assigned by the provider network infrastructure to particular resource instances; these public IP addresses may be referred to as standard public IP addresses, or simply standard IP addresses. In some embodiments, the mapping of a standard IP address to a local IP address of a resource instance is the default launch configuration for all resource instance types.

At least some public IP addresses may be allocated to or obtained by customers of the provider network 600; a customer may then assign their allocated public IP addresses to particular resource instances allocated to the customer. These public IP addresses may be referred to as customer public IP addresses, or simply customer IP addresses. Instead of being assigned by the provider network 600 to resource instances as in the case of standard IP addresses, customer IP addresses may be assigned to resource instances by the customers, for example via an API provided by the service provider. Unlike standard IP addresses, customer IP addresses are allocated to customer accounts and can be remapped to other resource instances by the respective customers as necessary or desired. A customer IP address is associated with a customer's account, not a particular resource instance, and the customer controls that IP address until the customer chooses to release it. Unlike conventional static IP addresses, customer IP addresses allow the customer to mask resource instance or availability zone failures by remapping the customer's public IP addresses to any resource instance associated with the customer's account. The customer IP addresses, for example, enable a customer to engineer around problems with the customer's resource instances or software by remapping customer IP addresses to replacement resource instances.

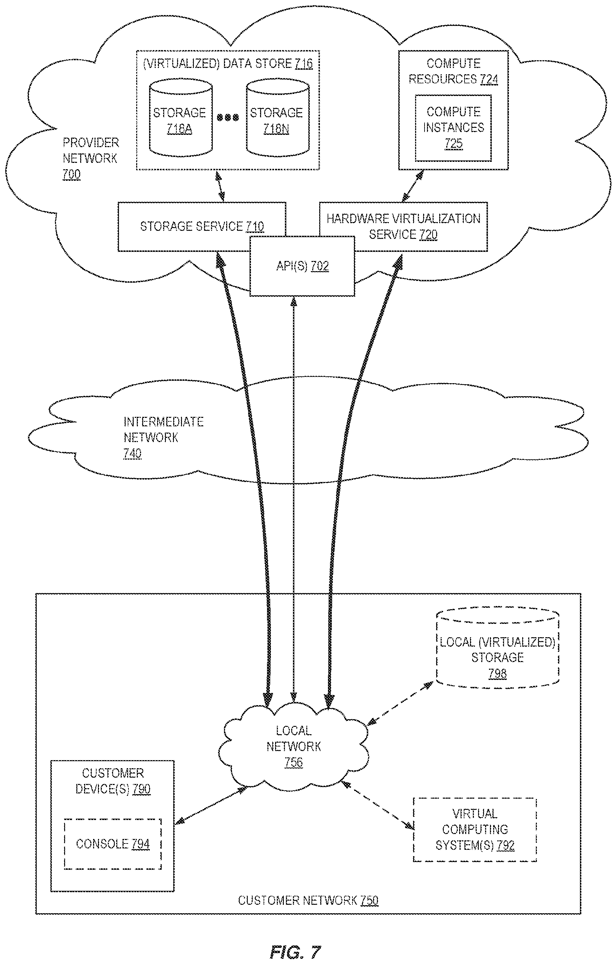

FIG. 7 is a block diagram of an example provider network that provides a storage service and a hardware virtualization service to customers, according to some embodiments. Hardware virtualization service 720 provides multiple compute resources 724 (e.g., compute instances 725 such as VMs) to customers. The compute resources 724 may, for example, be rented or leased to customers of the provider network 700 (e.g., to a customer that implements customer network 750). Each computation resource 724 may be provided with one or more local IP addresses. Provider network 700 may be configured to route packets from the local IP addresses of the compute resources 724 to public Internet destinations, and from public Internet sources to the local IP addresses of compute resources 724.

Provider network 700 may provide a customer network 750, for example coupled to intermediate network 740 via local network 756, the ability to implement virtual computing systems 792 via hardware virtualization service 720 coupled to intermediate network 740 and to provider network 700. In some embodiments, hardware virtualization service 720 may provide one or more APIs 702, for example a web services interface, via which a customer network 750 may access functionality provided by the hardware virtualization service 720, for example via a console 794 (e.g., a web-based application, standalone application, mobile application, etc.). In some embodiments, at the provider network 700, each virtual computing system 792 at customer network 750 may correspond to a computation resource 724 that is leased, rented, or otherwise provided to customer network 750.

From an instance of a virtual computing system 792 and/or another customer device 790 (e.g., via console 794), the customer may access the functionality of storage service 710, for example via one or more APIs 702, to access data from and store data to storage resources 718A-718N of a virtual data store 716 (e.g., a folder or "bucket", a virtualized volume, a database, etc.) provided by the provider network 700. In some embodiments, a virtualized data store gateway (not shown) may be provided at the customer network 750 that may locally cache at least some data, for example frequently-accessed or critical data, and that may communicate with storage service 710 via one or more communications channels to upload new or modified data from a local cache so that the primary store of data (virtualized data store 716) is maintained. In some embodiments, a user, via a virtual computing system 792 and/or on another customer device 790, may mount and access virtual data store 716 volumes via storage service 710 acting as a storage virtualization service, and these volumes may appear to the user as local (virtualized) storage 798.

While not shown in FIG. 7, the virtualization service(s) may also be accessed from resource instances within the provider network 700 via API(s) 702. For example, a customer, appliance service provider, or other entity may access a virtualization service from within a respective virtual network on the provider network 700 via an API 702 to request allocation of one or more resource instances within the virtual network or within another virtual network.

### Illustrative systems

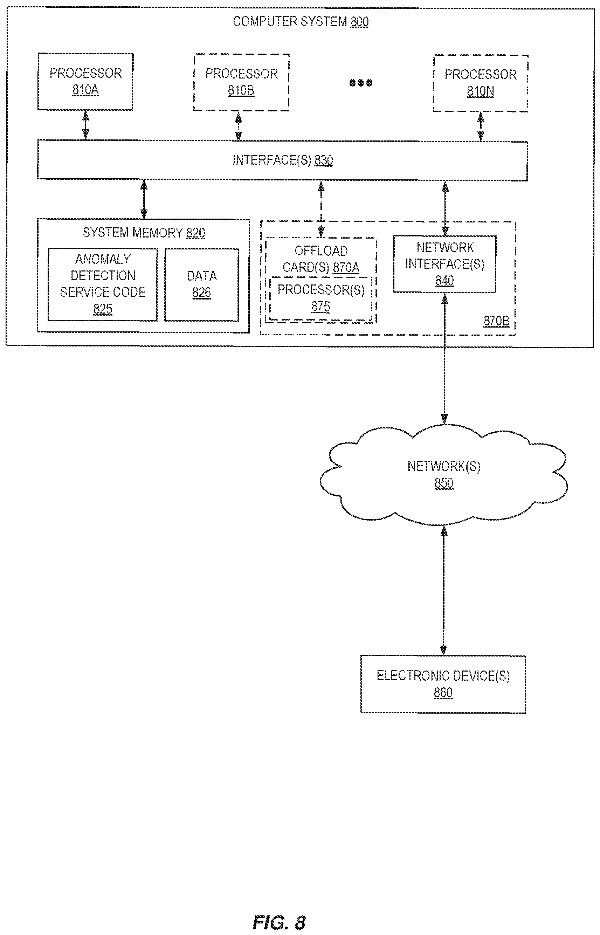

In some embodiments, a system that implements a portion or all of the techniques described herein may include a general-purpose computer system that includes or is configured to access one or more computer-accessible media, such as computer system 800 illustrated in FIG. 8. In the illustrated embodiment, computer system 800 includes one or more processors 810 coupled to a system memory 820 via an input/output (I/O) interface 830. Computer system 800 further includes a network interface 840 coupled to I/O interface 830. While FIG. 8 shows computer system 800 as a single computing device, in various embodiments a computer system 800 may include one computing device or any number of computing devices configured to work together as a single computer system 800.

In various embodiments, computer system 800 may be a uniprocessor system including one processor 810, or a multiprocessor system including several processors 810 (e.g., two, four, eight, or another suitable number). Processors 810 may be any suitable processors capable of executing instructions. For example, in various embodiments, processors 810 may be general-purpose or embedded processors implementing any of a variety of instruction set architectures (ISAs), such as the x86, ARM, PowerPC, SPARC, or MIPS ISAs, or any other suitable ISA. In multiprocessor systems, each of processors 810 may commonly, but not necessarily, implement the same ISA.

System memory 820 may store instructions and data accessible by processor(s) 810. In various embodiments, system memory 820 may be implemented using any suitable memory technology, such as random-access memory (RAM), static RAM (SRAM), synchronous dynamic RAM (SDRAM), nonvolatile/Flash-type memory, or any other type of memory. In the illustrated embodiment, program instructions and data implementing one or more desired functions, such as those methods, techniques, and data described above are shown stored within system memory 820 as anomaly detection service code 825 (e.g., executable to implement, in whole or in part, the anomaly detection service 110) and data 826.

In one embodiment, I/O interface 830 may be configured to coordinate I/O traffic between processor 810, system memory 820, and any peripheral devices in the device, including network interface 840 or other peripheral interfaces. In some embodiments, I/O interface 830 may perform any necessary protocol, timing or other data transformations to convert data signals from one component (e.g., system memory 820) into a format suitable for use by another component (e.g., processor 810). In some embodiments, I/O interface 830 may include support for devices attached through various types of peripheral buses, such as a variant of the Peripheral Component Interconnect (PCI) bus standard or the Universal Serial Bus (USB) standard, for example. In some embodiments, the function of I/O interface 830 may be split into two or more separate components, such as a north bridge and a south bridge, for example. Also, in some embodiments some or all of the functionality of I/O interface 830, such as an interface to system memory 820, may be incorporated directly into processor 810.

Network interface 840 may be configured to allow data to be exchanged between computer system 800 and other devices 860 attached to a network or networks 850, such as other computer systems or devices as illustrated in FIG. 1, for example. In various embodiments, network interface 840 may support communication via any suitable wired or wireless general data networks, such as types of Ethernet network, for example. Additionally, network interface 840 may support communication via telecommunications/telephony networks such as analog voice networks or digital fiber communications networks, via storage area networks (SANs) such as Fibre Channel SANs, or via I/O any other suitable type of network and/or protocol.

In some embodiments, a computer system 800 includes one or more offload cards 870A or 870B (including one or more processors 875, and possibly including the one or more network interfaces 840) that are connected using an I/O interface 830 (e.g., a bus implementing a version of the Peripheral Component Interconnect - Express (PCI-E) standard, or another interconnect such as a QuickPath interconnect (QPI) or UltraPath interconnect (UPI)). For example, in some embodiments the computer system 800 may act as a host electronic device (e.g., operating as part of a hardware virtualization service) that hosts compute resources such as compute instances, and the one or more offload cards 870A or 870B execute a virtualization manager that can manage compute instances that execute on the host electronic device. As an example, in some embodiments the offload card(s) 870A or 870B can perform compute instance management operations such as pausing and/or un-pausing compute instances, launching and/or terminating compute instances, performing memory transfer/copying operations, etc. These management operations may, in some embodiments, be performed by the offload card(s) 870A or 870B in coordination with a hypervisor (e.g., upon a request from a hypervisor) that is executed by the other processors 810A-810N of the computer system 800. However, in some embodiments the virtualization manager implemented by the offload card(s) 870A or 870B can accommodate requests from other entities (e.g., from compute instances themselves), and may not coordinate with (or service) any separate hypervisor.

In some embodiments, system memory 820 may be one embodiment of a computer-accessible medium configured to store program instructions and data as described above. However, in other embodiments, program instructions and/or data may be received, sent, or stored upon different types of computer-accessible media. Generally speaking, a computer-accessible medium may include non-transitory storage media or memory media such as magnetic or optical media, e.g., disk or DVD/CD coupled to computer system 800 via I/O interface 830. A non-transitory computer-accessible storage medium may also include any volatile or non-volatile media such as RAM (e.g., SDRAM, double data rate (DDR) SDRAM, SRAM, etc.), read only memory (ROM), etc., that may be included in some embodiments of computer system 800 as system memory 820 or another type of memory. Further, a computer-accessible medium may include transmission media or signals such as electrical, electromagnetic, or digital signals, conveyed via a communication medium such as a network and/or a wireless link, such as may be implemented via network interface 840.

Various embodiments discussed or suggested herein can be implemented in a wide variety of operating environments, which in some cases can include one or more user computers, computing devices, or processing devices which can be used to operate any of a number of applications. User or client devices can include any of a number of general-purpose personal computers, such as desktop or laptop computers running a standard operating system, as well as cellular, wireless, and handheld devices running mobile software and capable of supporting a number of networking and messaging protocols. Such a system also can include a number of workstations running any of a variety of commercially available operating systems and other known applications for purposes such as development and database management. These devices also can include other electronic devices, such as dummy terminals, thin-clients, gaming systems, and/or other devices capable of communicating via a network.

Most embodiments utilize at least one network that would be familiar to those skilled in the art for supporting communications using any of a variety of widely-available protocols, such as Transmission Control Protocol / Internet Protocol (TCP/IP), File Transfer Protocol (FTP), Universal Plug and Play (UPnP), Network File System (NFS), Common Internet File System (CIFS), Extensible Messaging and Presence Protocol (XMPP), AppleTalk, etc. The network(s) can include, for example, a local area network (LAN), a wide-area network (WAN), a virtual private network (VPN), the Internet, an intranet, an extranet, a public switched telephone network (PSTN), an infrared network, a wireless network, and any combination thereof.

In embodiments utilizing a web server, the web server can run any of a variety of server or mid-tier applications, including HTTP servers, File Transfer Protocol (FTP) servers, Common Gateway Interface (CGI) servers, data servers, Java servers, business application servers, etc. The server(s) also may be capable of executing programs or scripts in response requests from user devices, such as by executing one or more Web applications that may be implemented as one or more scripts or programs written in any programming language, such as Java^{®}, C, C# or C++, or any scripting language, such as Perl, Python, PHP, or TCL, as well as combinations thereof. The server(s) may also include database servers, including without limitation those commercially available from Oracle(R), Microsoft(R), Sybase(R), IBM(R), etc. The database servers may be relational or non-relational (e.g., "NoSQL"), distributed or non-distributed, etc.

Environments disclosed herein can include a variety of data stores and other memory and storage media as discussed above. These can reside in a variety of locations, such as on a storage medium local to (and/or resident in) one or more of the computers or remote from any or all of the computers across the network. In a particular set of embodiments, the information may reside in a storage-area network (SAN) familiar to those skilled in the art. Similarly, any necessary files for performing the functions attributed to the computers, servers, or other network devices may be stored locally and/or remotely, as appropriate. Where a system includes computerized devices, each such device can include hardware elements that may be electrically coupled via a bus, the elements including, for example, at least one central processing unit (CPU), at least one input device (e.g., a mouse, keyboard, controller, touch screen, or keypad), and/or at least one output device (e.g., a display device, printer, or speaker). Such a system may also include one or more storage devices, such as disk drives, optical storage devices, and solid-state storage devices such as random-access memory (RAM) or read-only memory (ROM), as well as removable media devices, memory cards, flash cards, etc.

Such devices also can include a computer-readable storage media reader, a communications device (e.g., a modem, a network card (wireless or wired), an infrared communication device, etc.), and working memory as described above. The computer-readable storage media reader can be connected with, or configured to receive, a computer-readable storage medium, representing remote, local, fixed, and/or removable storage devices as well as storage media for temporarily and/or more permanently containing, storing, transmitting, and retrieving computer-readable information. The system and various devices also typically will include a number of software applications, modules, services, or other elements located within at least one working memory device, including an operating system and application programs, such as a client application or web browser. It should be appreciated that alternate embodiments may have numerous variations from that described above. For example, customized hardware might also be used and/or particular elements might be implemented in hardware, software (including portable software, such as applets), or both. Further, connection to other computing devices such as network input/output devices may be employed.

Storage media and computer readable media for containing code, or portions of code, can include any appropriate media known or used in the art, including storage media and communication media, such as but not limited to volatile and non-volatile, removable and non-removable media implemented in any method or technology for storage and/or transmission of information such as computer readable instructions, data structures, program modules, or other data, including RAM, ROM, Electrically Erasable Programmable Read-Only Memory (EEPROM), flash memory or other memory technology, Compact Disc-Read Only Memory (CD-ROM), Digital Versatile Disk (DVD) or other optical storage, magnetic cassettes, magnetic tape, magnetic disk storage or other magnetic storage devices, or any other medium which can be used to store the desired information and which can be accessed by a system device. Based on the disclosure and teachings provided herein, a person of ordinary skill in the art will appreciate other ways and/or methods to implement the various embodiments.

In the preceding description, various embodiments are described. For purposes of explanation, specific configurations and details are set forth in order to provide a thorough understanding of the embodiments. However, it will also be apparent to one skilled in the art that the embodiments may be practiced without the specific details. Furthermore, well-known features may be omitted or simplified in order not to obscure the embodiment being described.

Bracketed text and blocks with dashed borders (e.g., large dashes, small dashes, dot-dash, and dots) are used herein to illustrate optional operations that add additional features to some embodiments. However, such notation should not be taken to mean that these are the only options or optional operations, and/or that blocks with solid borders are not optional in certain embodiments.

Reference numerals with suffix letters may be used to indicate that there can be one or multiple instances of the referenced entity in various embodiments, and when there are multiple instances, each does not need to be identical but may instead share some general traits or act in common ways. Further, the particular suffixes used are not meant to imply that a particular amount of the entity exists unless specifically indicated to the contrary. Thus, two entities using the same or different suffix letters may or may not have the same number of instances in various embodiments.

References to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Moreover, in the various embodiments described above, unless specifically noted otherwise, disjunctive language such as the phrase "at least one of A, B, or C" is intended to be understood to mean either A, B, or C, or any combination thereof (e.g., A, B, and/or C). As such, disjunctive language is not intended to, nor should it be understood to, imply that a given embodiment requires at least one of A, at least one of B, or at least one of C to each be present.

Unless otherwise explicitly stated, articles such as "a" or "an" should generally be interpreted to include one or more described items. Accordingly, phrases such as "a device configured to" are intended to include one or more recited devices. Such one or more recited devices can also be collectively configured to carry out the stated recitations. For example, "a processor configured to carry out recitations A, B, and C" can include a first processor configured to carry out recitation A working in conjunction with a second processor configured to carry out recitations B and C.

The specification and drawings are, accordingly, to be regarded in an illustrative rather than a restrictive sense. It will, however, be evident that various modifications and changes may be made thereunto without departing from the scope of the invention as set forth in the claims.

## Claims

1. A computer-implemented method comprising:
receiving (502) a request to detect anomalies, using an anomaly detection service (110), in time series data using one or more of a plurality of different detectors (407);
configuring (504) the anomaly detection service (110) by:
receiving the time series data,
analyzing the time series data and determining attributes of the time series data, wherein the attributes of the time series data include one or more of: a metric resource type; a metric type; metric features; metric limit thresholds; and metric domain knowledge,
generating (508) a configuration for use by an anomaly generator (411) of the anomaly detection service (110) by identifying, based on at least the time series data and the attributes, at least one particular detector of the one or more of the plurality of different detectors (407) to use for detecting anomalies in the time series data for a particular problem, and
configuring (510) the anomaly detection service (110) using the generated configuration;
evaluating (512) the time series data for an anomaly using the configured anomaly detection service (110) by:
ingesting (514) the time series data,
observing (516) potentially anomalous behavior using the identified at least one particular detector of the one or more of the plurality of different detectors (407), and
generating (520) an anomaly indication; and
providing (524) the anomaly indication to a user.

2. The computer-implemented method of claim 1, wherein the time series data is ingested from a metrics service of a provider network.

3. The computer-implemented method of any of claims 1-2, wherein the type of anomaly to detect is one of a threshold-based anomaly, a missing data anomaly, and a changepoint anomaly.

4. The computer-implemented method of any of claims 1-3, wherein the identified at least one particular detector of the one or more detectors (407) is one of a machine learning model, rules-based, or statistics-based.

5. The computer-implemented method of any of claims 1-4, further comprising:
aggregating (518) the observed potentially anomalous behavior with other observed potentially anomalous behavior, and
only generating (520) an anomaly indication when an amount aggregated observed potentially anomalous behaviors exceeds a threshold.

6. The computer-implemented method of any of claims 1-5, further comprising:
annotating (522) the anomaly to provide insight as to why the anomaly was generated.

7. The computer-implemented method of any of claims 1-6, further comprising:
raising an alarm for the anomaly.

8. The computer-implemented method of any of claims 1-7, wherein the request includes one or more of: an indication of a source of time series data to evaluate, a location of where to put detected anomalies, an indication of what users are allowed to provide feedback, an initial configuration, an indication of a type of anomaly to detect, an indication of when to present an anomaly to a user, an indication of who is to receive an anomaly indication or an indications of its existence, a namespace that includes a metric, an indication of a period for evaluation, a statistic or percentile to use during evaluation, a datapoint to alarm, and an indication of treatment of missing data.

9. The computer-implemented method of any of claims 1-8, further comprising:
receiving (526) feedback and reconfiguring the anomaly detection service (110) based on the received feedback.

10. The computer-implemented method of claim 9, wherein the anomaly indication includes at least one of a score to indication how different the potentially anomalous behavior was from an expected behavior, event information including a start and a stop time, and a type of anomaly detected.

11. A system comprising:
a first one or more electronic devices (118) to provide time series data to be analyzed for anomalies;
a second one or more electronic devices to implement an anomaly detection service (110) in a multi-tenant provider network (100), the anomaly detection service (110) including instructions that upon execution cause the anomaly detection service (110) to:
receive a request to detect anomalies, using an anomaly detection service (110), in time series data using one or more of a plurality of different detectors (407);
configure the anomaly detection service (110) by:
receiving the time series data,
analyzing the time series data and determining attributes of the time series data, wherein the attributes of the time series data include one or more of: a metric resource type; a metric type; metric features; metric limit thresholds; and metric domain knowledge,
generating a configuration for use by an anomaly generator (411) of the anomaly detection service (110) by identifying, based on at least the time series data and the attributes, at least one particular detector of the one or more of the plurality of different detectors (407) to use for detecting anomalies in the time series data for a particular problem, and
configuring the anomaly detection service (110) using the generated configuration;
evaluate the time series data for an anomaly using the configured anomaly detection service (110) by:
ingesting the time series data,
observing potentially anomalous behavior using the identified at least one particular detector of the one or more of the plurality of different detectors (407), and
generating an anomaly indication; and
provide the anomaly indication to a user.

12. The system of claim 11, wherein the type of anomaly to detect is one of a threshold-based anomaly, a missing data anomaly, and a changepoint anomaly.

13. The system of any of claims 11-12, wherein the identified at least one particular detector of the one or more detectors (407) is one of a machine learning model, rules-based, or statistics-based.

14. The system of any of claims 11-13, wherein the request includes one or more of: an indication of a source of time series data to evaluate, a location of where to put detected anomalies, an indication of what users are allowed to provide feedback, an initial configuration, an indication of a type of anomaly to detect, an indication of when to present an anomaly to a user, an indication of who is to receive an anomaly indication or an indications of its existence, a namespace that includes a metric, an indication of a period for evaluation, a statistic or percentile to use during evaluation, a datapoint to alarm, and an indication of treatment of missing data.

## Patentansprüche

1. Computerimplementiertes Verfahren, umfassend:
Empfangen (502) einer Anforderung zum Detektieren unter Verwendung eines Anomaliedetektionsdienstes (110) von Anomalien in Zeitreihendaten unter Verwendung eines oder mehrerer einer Vielzahl von verschiedenen Detektoren (407);
Konfigurieren (504) des Anomaliedetektionsdienstes (110) durch Folgendes:
Empfangen der Zeitreihendaten,
Analysieren der Zeitreihendaten und Bestimmen von Attributen der Zeitreihendaten, wobei die Attribute der Zeitreihendaten eines oder mehrere von Folgendem beinhalten: einen Metrikressourcentyp; einen Metriktyp; Metrikmerkmale; Metrikgrenzwertschwellen; und Metrikdomänenwissen,
Generieren (508) einer Konfiguration zur Verwendung durch einen Anomaliegenerator (411) des Anomaliedetektionsdienstes (110) durch Identifizieren mindestens eines bestimmter Detektors des einen oder der mehreren der Vielzahl von verschiedenen Detektoren (407) auf Grundlage mindestens der Zeitreihendaten und der Attribute zur Verwendung zum Detektieren von Anomalien in den Zeitreihendaten für ein bestimmtes Problem und
Konfigurieren (510) des Anomaliedetektionsdienstes (110) unter Verwendung der generierten Konfiguration;
Auswerten (512) der Zeitreihendaten betreffend eine Anomalie unter Verwendung des konfigurierten Anomaliedetektionsdienstes (110) durch Folgendes:
Aufnehmen (514) der Zeitreihendaten,
Beobachten (516) potenziell anomalen Verhaltens unter Verwendung des identifizierten mindestens einen bestimmten Detektors des einen oder der mehreren der Vielzahl von verschiedenen Detektoren (407) und
Generieren (520) einer Anomalieangabe; und
Bereitstellen (524) der Anomalieangabe an einen Benutzer.

2. Computerimplementiertes Verfahren nach Anspruch 1, wobei die Zeitreihendaten von einem Metrikdienst eines Anbieternetzwerks aufgenommen werden.

3. Computerimplementiertes Verfahren nach einem der Ansprüche 1-2, wobei der Typ der zu detektierenden Anomalie einer von einer Anomalie auf Schwellenbasis, einer Anomalie fehlender Daten und einer Anomalie eines Änderungspunkts ist.

4. Computerimplementiertes Verfahren nach einem der Ansprüche 1-3, wobei der identifizierte mindestens eine bestimmte Detektor des einen oder der mehreren Detektoren (407) eines von einem Maschinenlernmodell, regelbasiert oder statistikbasiert ist.

5. Computerimplementiertes Verfahren nach einem der Ansprüche 1-4, ferner umfassend:
Aggregieren (518) des beobachteten potenziell anomalen Verhaltens mit anderem beobachtetem potenziell anomalem Verhalten und
nur Generieren (520) einer Anomalieangabe, wenn eine aggregierte Menge beobachteter potenziell anomaler Verhalten einen Schwellenwert überschreitet.

6. Computerimplementiertes Verfahren nach einem der Ansprüche 1-5, ferner umfassend:
Annotieren (522) der Anomalie zum Bereitstellen von Einblicken, warum die Anomalie generiert wurde.

7. Computerimplementiertes Verfahren nach einem der Ansprüche 1-6, ferner umfassend:
Auslösen eines Alarms für die Anomalie.

8. Computerimplementiertes Verfahren nach einem der Ansprüche 1-7, wobei die Anforderung eines oder mehrere von Folgendem beinhaltet: eine Angabe einer Quelle von auszuwertenden Zeitreihendaten, einen Ort zum Platzieren detektierter Anomalien, eine Angabe, welche Benutzer Rückmeldungen bereitstellen dürfen, eine Anfangskonfiguration, eine Angabe eines Typs der zu detektierenden Anomalie, eine Angabe, wann einem Benutzer eine Anomalie zu präsentieren ist, eine Angabe, wer eine Anomalieangabe oder eine Angabe ihres Vorhandenseins zu empfangen hat, einen Namespace, der eine Metrik beinhaltet, eine Angabe eines Auswertungszeitraums, eine Statistik oder ein Perzentil zum Verwenden während der Auswertung, einen Datenpunkt für Alarm und eine Angabe zur Behandlung fehlender Daten.

9. Computerimplementiertes Verfahren nach einem der Ansprüche 1-8, ferner umfassend:
Empfangen (526) einer Rückmeldung und Rekonfigurieren des Anomaliedetektionsdienstes (110) auf Grundlage der empfangenen Rückmeldung.

10. Computerimplementiertes Verfahren nach Anspruch 9, wobei die Anomalieangabe mindestens eines von einem Wert zur Angabe, wie unterschiedlich das potenziell anomale Verhalten von einem erwarteten Verhalten war, Ereignisinformationen, einschließlich einer Start- und einer Stoppzeit, und einem Typ der zu detektierenden Anomalie beinhaltet.

11. System, umfassend:
eine erste eine oder mehrere elektronische Vorrichtungen (118) zum Bereitstellen von Zeitreihendaten, die auf Anomalien zu analysieren sind;
eine zweite eine oder mehrere elektronische Vorrichtungen zum Implementieren eines Anomaliedetektionsdienstes (110) in einem Multi-Mandanten-Anbieternetzwerk (100), wobei der Anomaliedetektionsdienst (110) Anweisungen beinhaltet, die bei Ausführung den Anomaliedetektionsdienst (110) zu Folgendem veranlassen:
Empfangen einer Anforderung zum Detektieren unter Verwendung eines Anomaliedetektionsdienstes (110) von Anomalien in Zeitreihendaten unter Verwendung eines oder mehrerer einer Vielzahl von verschiedenen Detektoren (407);
Konfigurieren des Anomaliedetektionsdienstes (110) durch Folgendes:
Empfangen der Zeitreihendaten,
Analysieren der Zeitreihendaten und Bestimmen von Attributen der Zeitreihendaten, wobei die Attribute der Zeitreihendaten eines oder mehrere von Folgendem beinhalten: einen Metrikressourcentyp; einen Metriktyp; Metrikmerkmale; Metrikgrenzwertschwellen; und Metrikdomänenwissen,
Generieren einer Konfiguration zur Verwendung durch einen Anomaliegenerator (411) des Anomaliedetektionsdienstes (110) durch Identifizieren mindestens eines bestimmter Detektors des einen oder der mehreren der Vielzahl von verschiedenen Detektoren (407) auf Grundlage mindestens der Zeitreihendaten und der Attribute zur Verwendung zum Detektieren von Anomalien in den Zeitreihendaten für ein bestimmtes Problem und
Konfigurieren des Anomaliedetektionsdienstes (110) unter Verwendung der generierten Konfiguration;
Auswerten der Zeitreihendaten betreffend eine Anomalie unter Verwendung des konfigurierten Anomaliedetektionsdienstes (110) durch Folgendes:
Aufnehmen der Zeitreihendaten,
Beobachten potenziell anomalen Verhaltens unter Verwendung des identifizierten mindestens einen bestimmten Detektors des einen oder der mehreren der Vielzahl von verschiedenen Detektoren (407) und
Generieren einer Anomalieangabe; und
Bereitstellen der Anomalieangabe an einen Benutzer.

12. System nach Anspruch 11, wobei der Typ der zu detektierenden Anomalie eines von einer Anomalie auf Schwellenbasis, einer Anomalie fehlender Daten und einer Anomalie eines Änderungspunkts ist.

13. System nach einem der Ansprüche 11-12, wobei der identifizierte mindestens eine bestimmte Detektor des einen oder der mehreren Detektoren (407) eines von einem Maschinenlernmodell, regelbasiert oder statistikbasiert ist.

14. System nach einem der Ansprüche 11-13, wobei die Anforderung eines oder mehrere von Folgendem beinhaltet: eine Angabe einer Quelle von auszuwertenden Zeitreihendaten, einen Ort zum Platzieren detektierter Anomalien, eine Angabe, welche Benutzer Rückmeldungen bereitstellen dürfen, eine Anfangskonfiguration, eine Angabe eines Typs der zu detektierenden Anomalie, eine Angabe, wann einem Benutzer eine Anomalie zu präsentieren ist, eine Angabe, wer eine Anomalieangabe oder eine Angabe ihres Vorhandenseins zu empfangen hat, einen Namespace, der eine Metrik beinhaltet, eine Angabe eines Auswertungszeitraums, eine Statistik oder ein Perzentil zum Verwenden während der Auswertung, einen Datenpunkt für Alarm und eine Angabe zur Behandlung fehlender Daten.

## Revendications

1. Procédé mis en œuvre par ordinateur, comprenant :
la réception (502) d'une demande de détection d'anomalies, à l'aide d'un service de détection d'anomalies (110), dans des données de série temporelle à l'aide d'un ou de plusieurs parmi une pluralité de détecteurs différents (407) ;
la configuration (504) du service de détection d'anomalies (110) par :
la réception des données de série temporelle,
l'analyse des données de série temporelle et la détermination d'attributs des données de série temporelle, dans lequel les attributs des données de série temporelle comprennent un ou plusieurs parmi : un type de ressource de mesure ; un type de mesure ; des caractéristiques de mesure ; des seuils de limite de mesure ; et des connaissances de domaine de mesure,
la génération (508) d'une configuration destinée à être utilisée par un générateur d'anomalies (411) du service de détection d'anomalies (110) en identifiant, sur la base au moins des données de série temporelle et des attributs, au moins un détecteur particulier des un ou plusieurs parmi la pluralité de détecteurs différents (407) à utiliser pour détecter des anomalies dans les données de série temporelle pour un problème particulier, et
la configuration (510) du service de détection d'anomalies (110) à l'aide de la configuration générée ;
l'évaluation (512) des données de série temporelle à la recherche d'une anomalie à l'aide du service de détection d'anomalies (110) configuré, par :
l'ingestion (514) des données de série temporelle,
l'observation (516) d'un comportement potentiellement anormal à l'aide de l'au moins un détecteur particulier identifié des un ou plusieurs parmi la pluralité de détecteurs différents (407), et
la génération (520) d'une indication d'anomalie ; et
la fourniture (524) de l'indication d'anomalie à un utilisateur.

2. Procédé mis en œuvre par ordinateur selon la revendication 1, dans lequel les données de série temporelle sont ingérées à partir d'un service de mesure d'un réseau fournisseur.

3. Procédé mis en œuvre par ordinateur selon l'une quelconque des revendications 1 à 2, dans lequel le type d'anomalie à détecter est l'une d'une anomalie basée sur un seuil, d'une anomalie de données manquantes et d'une anomalie de point de changement.

4. Procédé mis en œuvre par ordinateur selon l'une quelconque des revendications 1 à 3, dans lequel l'au moins un détecteur particulier identifié des un ou plusieurs détecteurs (407) est l'un d'un modèle d'apprentissage automatique, d'un modèle basé sur des règles ou d'un modèle basé sur des statistiques.

5. Procédé mis en œuvre par ordinateur selon l'une quelconque des revendications 1 à 4, comprenant également :
l'agrégation (518) du comportement potentiellement anormal observé avec d'autres comportements potentiellement anormaux observés, et
la génération (520) d'une indication d'anomalie uniquement lorsqu'une quantité agrégée de comportements potentiellement anormaux observés dépasse un seuil.

6. Procédé mis en œuvre par ordinateur selon l'une quelconque des revendications 1 à 5, comprenant également :
l'annotation (522) de l'anomalie pour donner une idée de la raison pour laquelle l'anomalie a été générée.

7. Procédé mis en œuvre par ordinateur selon l'une quelconque des revendications 1 à 6, comprenant également :
le déclenchement d'une alarme pour l'anomalie.

8. Procédé mis en œuvre par ordinateur selon l'une quelconque des revendications 1 à 7, dans lequel la demande comprend un ou plusieurs parmi : une indication d'une source de données de série temporelle à évaluer, un emplacement où placer les anomalies détectées, une indication de ce que les utilisateurs sont autorisés à fournir en retour, une configuration initiale, une indication d'un type d'anomalie à détecter, une indication du moment où présenter une anomalie à un utilisateur, une indication de la personne devant recevoir une indication d'anomalie ou des indications de son existence, un espace de noms qui comprend une mesure, une indication d'une période d'évaluation, une statistique ou un pourcentage à utiliser pendant l'évaluation, un point de données pour l'alarme, et une indication de traitement de données manquantes.

9. Procédé mis en œuvre par ordinateur selon l'une quelconque des revendications 1 à 8, comprenant également :
la réception (526) d'un retour et d'une reconfiguration du service de détection d'anomalies (110) sur la base du retour reçu.

10. Procédé mis en œuvre par ordinateur selon la revendication 9, dans lequel l'indication d'anomalie comprend au moins l'un parmi un score pour indiquer la différence entre le comportement potentiellement anormal et un comportement attendu, des informations d'événement comprenant un temps de démarrage et un temps d'arrêt, et un type d'anomalie détectée.

11. Système comprenant :
un ou plusieurs premiers dispositifs électroniques (118) pour fournir des données de série temporelle à analyser à la recherche d'anomalies ;
un ou plusieurs seconds dispositifs électroniques pour mettre en œuvre un service de détection d'anomalies (110) dans un réseau fournisseur multi-locataire (100), le service de détection d'anomalies (110) comprenant des instructions qui, lors de l'exécution, amènent le service de détection d'anomalies (110) à :
recevoir une demande de détection d'anomalies, à l'aide d'un service de détection d'anomalies (110), dans des données de série temporelle à l'aide d'un ou de plusieurs parmi une pluralité de détecteurs différents (407) ;
configurer le service de détection d'anomalies (110) par :
la réception des données de série temporelle,
l'analyse des données de série temporelle et la détermination d'attributs des données de série temporelle, dans lequel les attributs des données de série temporelle comprennent un ou plusieurs parmi : un type de ressource de mesure ; un type de mesure ; des caractéristiques de mesure ; des seuils de limite de mesure ; et des connaissances de domaine de mesure,
la génération d'une configuration destinée à être utilisée par un générateur d'anomalies (411) du service de détection d'anomalies (110) en identifiant, sur la base au moins des données de série temporelle et des attributs, au moins un détecteur particulier des un ou plusieurs parmi la pluralité de détecteurs différents (407) à utiliser pour détecter des anomalies dans les données de série temporelle pour un problème particulier, et
la configuration du service de détection d'anomalies (110) à l'aide de la configuration générée ;
évaluer des données de série temporelle à la recherche d'une anomalie à l'aide du service de détection d'anomalies (110) configuré par :
l'ingestion des données de série temporelle,
l'observation d'un comportement potentiellement anormal à l'aide de l'au moins un détecteur particulier identifié des un ou plusieurs parmi la pluralité de détecteurs différents (407), et
la génération d'une indication d'anomalie ; et
la fourniture de l'indication d'anomalie à un utilisateur.

12. Système selon la revendication 11, dans lequel le type d'anomalie à détecter est l'une d'une anomalie basée sur un seuil, d'une anomalie de données manquantes ou d'une anomalie de point de changement.

13. Système selon l'une quelconque des revendications 11 à 12, dans lequel l'au moins un détecteur particulier identifié des un ou plusieurs détecteurs (407) est l'un d'un modèle d'apprentissage automatique, d'un modèle basé sur des règles ou d'un modèle basé sur des statistiques.

14. Système selon l'une quelconque des revendications 11 à 13, dans lequel la demande comprend un ou plusieurs parmi : une indication d'une source de données de série temporelle à évaluer, un emplacement où placer les anomalies détectées, une indication de ce que les utilisateurs sont autorisés à fournir en retour, une configuration initiale, une indication d'un type d'anomalie à détecter, une indication du moment où présenter une anomalie à un utilisateur, une indication de la personne devant recevoir une indication d'anomalie ou des indications de son existence, un espace de noms qui comprend une mesure, une indication d'une période d'évaluation, une statistique ou un pourcentage à utiliser pendant l'évaluation, un point de données pour l'alarme, et une indication de traitement de données manquantes.
